# EUROPEAN PATENT SPECIFICATION

(11) **EP 3 583 871 B1**
(45) Date of publication and mention of the grant of the patent: **27.10.2021**
(21) Application number: 18178168.3
(22) Date of filing: 18.06.2018
(51) Int. Cl.: A47J 27/18, A47J 27/56

(54) **PASTA COOKING APPLIANCE**
PASTAKOCHGERÄT
APPAREIL DE CUISSON DE PÂTES

(43) Date of publication of application: 25.12.2019
(73) Proprietor: Electrolux Professional S.p.A., 33170 Pordenone (IT)
(72) Inventor: TASSAN MANGINA, Franco, 33170 Pordenone (IT); PELLICCIA, Davide, 33170 Pordenone (IT)
(74) Representative: AWA Sweden AB

(56) References cited:
- JP-A- 2009 145 021
- US-A- 5 658 128
- US-B1- 6 638 028

## Description

The present invention relates to a pasta cooking appliance.

More specifically, the present invention preferably relates to a professional pasta cooking appliance to which the following description will make explicit reference without however losing in generality.

As is known, professional pasta cooking appliances basically comprise: a substantially parallelepiped-shaped, self-supporting cabinet having, on top, a nearly rectangular, cooking basin or sink which is adapted to contain several liters of water and additionally to selectively accommodate one or more detachable cooking baskets for pasta and similar foodstuff; one or more electric resistors that are generally located immediately outside the cooking basin, usually in abutment on the bottom of the latter, and are adapted to heat up the water contained in the cooking basin, so as to bring water to boil; and an electric power unit that selectively powers the resistors and additionally controls the amperage of the electric current circulating in the resistors, and thus the heat transferred to the water, according to the settings arriving from a manually-operated control panel usually located on front wall of the cabinet.

The main problem of the abovementioned pasta cooking appliances is the considerable consumption of electricity for keeping the water inside the cooking basin at boiling temperature.

The starch released into the water during the cooking of pasta and rice, in fact, decreases the surface tension of water and causes the boiling water to produce a great amount of foam that accumulates on surface of the boiling water and prevents, when the layer of foam covers the whole surface of the boiling water, the steam from freely leaving the mass of water, with all problems that this entails.

One example for a suggested solution is patent application JP 2009 145021 A which discloses a way to provide a boiling-over prevention device capable of continuing cooking without adding water or reducing heating power by defoaming generated foam to be a cause of boiling over during cooking. This is done by carrying out defoaming by air cooling by blowing air generated by using a blower device to the foam before causing boiling over, cooking can be continued without adding water or reducing the heating power.

Another example is patent application US 6 638 028 B1 which discloses a blower apparatus for preventing pots being used to heat liquid from boiling over. The blower apparatus includes a blower housing having an outlet nozzle; a blower assembly positioned in the blower housing for pushing a stream of air out of the housing through the outlet nozzle, the outlet nozzle is positioned at a top of the housing thus the outlet nozzle is designed for directing the stream of air over an adjacently positioned piece of cookware in which a liquid is being heated.

In fact, if the kitchen staff fail to quickly reduce the heat transferred to the boiling water, the steam trapped underneath the layer of starch foam produces a sudden rapid expansion of the water volume that causes the boil over of the water.

To prevent the boiling water from spilling over from the rim of cooking basin, today's professional pasta cooking appliances are provided with an overflow system that drains out of the cooking basin, and straight to an external waste-water drainage pipe, the water exceeding a given maximum level inside the cooking basin.

Obviously immediately after a turbulent boil-over phenomenon the volume of water inside the cooking basin suddenly reduces and the drained hot water needs to be quickly replaced with fresh water so as to restore the correct level of water inside the cooking basin. Unluckily the fresh water poured into the cooking basin is relatively cold and thus reduces the overall temperature of water mass that, therefore, has to be heated up again up to boiling temperature. This operation normally takes several minutes.

As a result, the professional pasta cooking appliances has a relatively long recovery time after boil over and consumes a lot of electric energy.

Aim of the present invention is to solve the drawbacks referred above.

In compliance with the above aims, according to the present invention there is provided a pasta cooking appliance comprising a self-supporting cabinet, an open-top cooking basin recessed on the top of the cabinet and dimensioned to contain several liters of water, a heating device adapted to selectively heat up the water contained in the cooking basin so as to bring the same water to boil, an electrically-operated blowing device adapted to blow an air jet towards the surface of the water contained in the cooking basin, and an electronic control unit adapted to switch on and off the blowing device. In this way, the produced starch foam is prevented from covering the whole surface of the water.

The heating device may be located inside the cabinet but may be located also inside the cooking basin so as to directly contact the water to be warmed up.

The electronic control unit is configured to detect when the pasta cooking appliance is operating in water boil-over conditions and to switch on the blowing device when said boil-over conditions are detected.

More preferably, the electronic control unit is connected to at least one sensor and is configured to detect when there are water boil-over conditions in the cooking basin - i.e. when water boil-over is taking place, or is close to take place, in the cooking basin - based on the signal received from said sensor, and to switch on the blowing device when the boil-over conditions are detected.

More in detail, water boil-over conditions are considered to exist in the cooking basin when water is flowing over, or is close to flow over, the sides of the cooking basin in boiling.

The pasta cooking appliance comprises also an overflow drain line designed to drain out of the cooking basin the water exceeding a given maximum level inside the cooking basin.

In one possible embodiment, the at least one sensor comprises a water presence sensor capable of detecting the presence of water in the overflow drain line and of generating a signal representative of (i.e. indicating) the presence of water in the overflow drain line.

In another possible embodiment, the at least one sensor comprises at least one temperature sensor capable of detecting the temperature of the water contained in the cooking basin and of generating a signal representative of (i.e. indicating) such temperature. In this case, the electronic control unit may be configured to detect boil-over conditions in the cooking basin based also on a further signal representative of (i.e. indicating) a heat output of the heating device.

Preferably, the blowing device is adapted to direct the air jet substantially along a horizontal direction.

The blowing device may be adapted to direct the air jet substantially tangent to an upper mouth of the cooking basin, so that the air jet is allowed to graze the surface of the water contained in the cooking basin.

The blowing device may comprise an electric blower and at least one air nozzle connected to the electric blower so as to receive the airflow generated by the electric blower and designed to eject the air jet. Advantageously, the air nozzle is positioned on one side of the upper mouth of the cooking basin and the air jet is ejected along the upper mouth of the cooking basin. In particular, the upper mouth of the cooking basin may have a lateral recess where the air nozzle is housed.

In one preferred embodiment, the electronic control unit is adapted to directly control the heating device.

The pasta cooking appliance preferably comprises also a water drain line that branches off from the bottom of the cooking basin and is adapted to channel the water contained in the cooking basin outside of the same pasta cooking appliance.

Moreover, the pasta cooking appliance preferably further comprises a water supply line which is connectable to the water mains and is adapted to channel/pour the fresh water of the water mains directly into the cooking basin.

Advantageously, the pasta cooking appliance further comprises one or more discrete cooking baskets, each of which is dimensioned to internally accommodate a given amount of pasta or similar foodstuff, and is adapted to be fitted in manually-removable manner onto the cooking basin so as to plunge all its contents into the water contained inside the cooking basin.

Preferably, the cooking basin is dimensioned to accommodate, at same time, a plurality of said removable cooking baskets arranged one adjacent the other.

The present invention further relates to an operating method of a pasta cooking appliance comprising an open-top cooking basin dimensioned to contain several liters of water; the method comprising the steps of:
- heating-up the water contained in the cooking basin so as to bring it to boil;
- detecting when the water in the cooking basin is in boil-over conditions or close to boil-over conditions; and
- when it is detected that the water in the cooking basin is in boil-over conditions or close to boil-over conditions, blowing an air jet towards the surface of the water contained in the cooking basin.

In this way, starch foam is prevented from covering the whole surface of the water.

The detection that the water is in boil-over conditions or close to boil-over conditions is an automatic detection, preferably by means of at least one sensor.

The blown air jet is a forced air jet, advantageously created by a blower and preferably ejected through a nozzle.

Preferably, the method comprises, when it is detected that the water in the cooking basin is in boil-over conditions or close to boil-over conditions, the further step of reducing or stopping heating-up of water.

The pasta cooking device comprises an overflow drain line designed to drain out of the cooking basin the water exceeding a given maximum level inside the cooking basin. In this case, the step of detecting when the water in the cooking basin is in boil-over conditions or close to boil-over conditions comprises detecting the presence of water in the overflow drain line.

Alternatively, the step of detecting when the water in the cooking basin is in boil-over conditions or close to boil-over conditions comprises detecting the temperature of the water contained in the cooking basin.

Additionally, the step of detecting when the water in the cooking basin is in boil-over conditions or close to boil-over conditions may be based also on the value of heat output of a heating device used for heating-up the water contained in the cooking basin.

Advantageously, the air jet is directed substantially along a horizontal direction. A non-limiting embodiment of the present invention will now be described, by way of example, with reference to the accompanying drawings, in which:
- Figure 1 is a perspective view of a pasta cooking appliance realized in accordance with the teachings of the present invention;
- Figures 2 is a side view of the upper portion of the pasta cooking appliance shown in Figure 1, sectioned along the vertical midplane of the appliance and with parts removed for clarity;
- Figures 3 is a side view of an alternative embodiment of the overflow draining system of the pasta cooking appliance shown in Figure 1, with parts in section and part removed for clarity; whereas
- Figure 4 is a schematic side view of an alternative embodiment of the pasta cooking appliance shown in Figure 1, with parts removed for clarity.

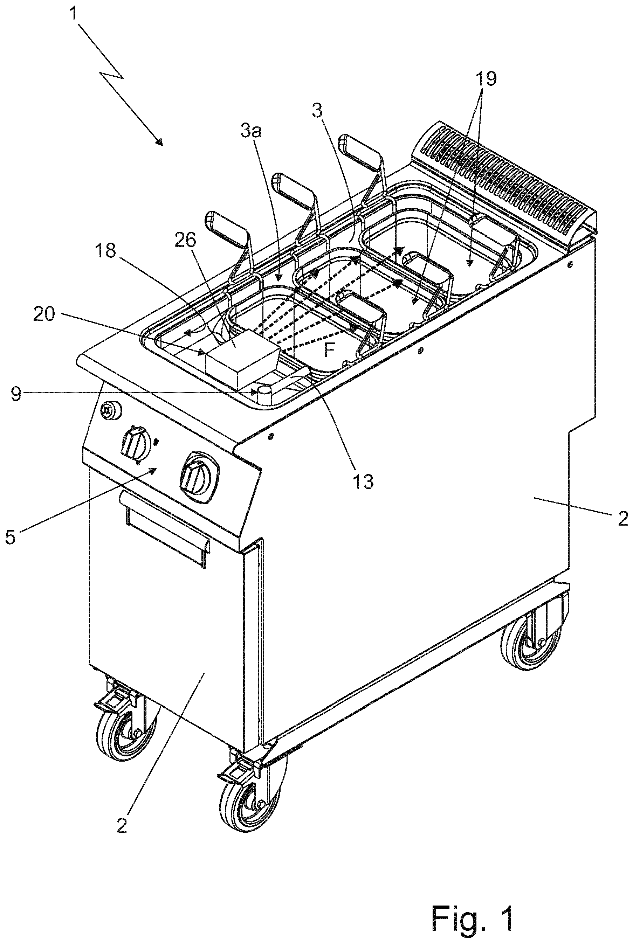

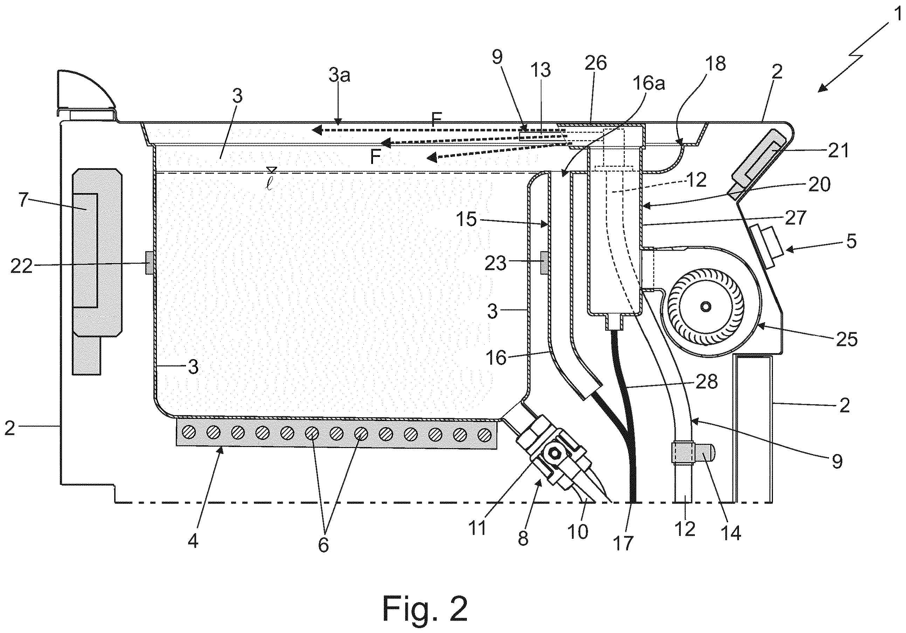

With reference to Figures 1 and 2, reference number 1 denotes as a whole a pasta cooking appliance specifically structured for quickly cooking pasta, rise and similar foodstuff and which is suitable for being used in the professional kitchen of restaurants, work canteens or the like.

The pasta cooking appliance 1 firstly comprises: a preferably substantially parallelepiped-shaped, self-supporting cabinet 2 which is preferably made of metal and is preferably provided with a number (four in the example shown) of ground-resting wheels; a preferably nearly rectangular, open-top cooking basin or sink 3 preferably made of metal, which is recessed on the top wall of cabinet 2, preferably in unmovable manner and preferably astride of the vertical midplane of the cabinet 2, and is dimensioned to contain several liters of water; and a heating device 4 which is located inside the cabinet 2 and is adapted to selectively heat up the water contained in the cooking basin 3 so as to bring the same water to boil.

Preferably, the heating device 4 is moreover adapted to control the amount of heat transferred to the water according to the settings arriving from a manually-operated control panel 5 preferably located on a front wall of cabinet 2.

More in detail, the cooking basin or sink 3 is preferably made of stainless steel and preferably has a capacity of more than 10 liters of water.

The heating device 4, in turn, is preferably an electrically-operated heating device and thus preferably comprises: one or more electric resistors 6 that are preferably arranged in abutment against, or incorporated into, the bottom wall and/or any side wall of the cooking basin 3, so as to transmit heat to the body of the cooking basin 3 and to the water contained therein preferably via direct thermal conduction; and preferably also an electric power unit 7 that selectively powers the/each resistor 6 and additionally controls the amperage of the electric current circulating in the/ each resistor 6 according to the settings arriving from the control panel 5.

With reference to Figures 1 and 2, the pasta cooking appliance 1 preferably additionally comprises: a water drain line 8 that branches off from the bottom of the cooking basin 3, is connectable to an external waste-water drainage pipe (not shown), and is adapted to selectively channel the water contained in the cooking basin 3 towards the same waste-water drainage pipe; and a water supply line 9 which is connectable to the water mains (not shown) and is adapted to selectively channel/ pour the fresh water of the water mains directly into the cooking basin 3.

The water drain line 8 preferably includes: a first connecting tube 10 that branches off from the bottom of cooking basin 3 and is directly connectable, at the other/opposite end, to the external waste-water drainage pipe (not shown); and a preferably manually-operated, shut-off valve 11 (a ball valve in the example shown) which is interposed between the bottom of cooking basin 3 and the connecting tube 10 for controlling the outflow of the water from the cooking basin 3.

The water supply line 9, in turn, preferably includes: a second connecting tube 12 which is directly connectable to the water mains and preferably ends into a preferably substantially L-shaped, tubular member or spout 13 that extends nearly horizontally over the upper mouth (i.e. the upper opening) 3a of the cooking basin 3 so as to pour the fresh water of the water mains directly into the cooking basin 3; and a preferably electrically-operated, second shut-off valve 14 which is preferably arranged along connecting tube 12 or tubular member 13, and is able to control the flow of fresh water along tube 12, towards the cooking basin 3. Preferably the shut-off valve 14 is furthermore directly controllable via the control panel 5.

According to a non-shown alternative embodiment, however, the water supply line 9 may lack the L-shaped tubular member or spout 13, and the second end of connecting tube 12 may be directly connected to a nozzle arranged on a side wall of cooking basin 3.

With reference to Figures 1 and 2, the pasta cooking appliance 1 additionally includes an overflow drain line 15 which is structured to immediately drain, out of the cooking basin 3 and straight to the aforesaid waste-water drainage pipe (not shown), all the water exceeding a given maximum level ℓ inside the cooking basin 3.

The overflow drain line 15 preferably basically comprises: a preferably substantially straight, descending tubular member 16, which extends nearly vertically adjacent to the cooking basin 3 and has the upper mouth 16a in direct communication with the inside of the cooking basin 3, at a given height from the bottom of cooking basin 3 and close to the upper mouth 3a; and preferably also a third connecting tube 17 that forms an extension of tubular member 16 and preferably joins the connecting tube 10 of water drain line 8 downstream of the shut-off valve 11. Alternatively, the second end of connecting tube 17 could be directly connectable to the external waste-water drainage pipe.

In the example shown, in particular, the upper mouth 3a of the cooking basin 3 preferably has a lateral recess 18 that extends substantially horizontally preferably towards the front wall of cabinet 2 and preferably astride of the vertical midplane of the cooking basin 3. The descending tubular member 16, in turn, preferably branches off from the bottom of the lateral recess 18 so as to collect and directly channel, by gravity and towards the external waste-water drainage pipe, the water entering into the lateral recess 18.

The level of water inside the cooking basin 3, therefore, cannot rise above the level of the bottom of lateral recess 18.

More in detail, the upper mouth 16a of tubular member 16 is preferably welded or anyway joined to the bottom wall of the lateral recess 18, or rather to the nearly horizontal section of the side wall of the cooking basin 3 forming the recess 18, so as to form a one-piece structure with the cooking basin 3.

Preferably the lateral recess 18 on the upper mouth 3a of cooking basin 3 additionally accommodates also the L-shaped tubular member or spout 13 of water supply line 9.

With reference to Figure 1, the pasta cooking appliance 1 preferably also includes at least one, and preferably a plurality of, discrete cooking baskets 19. The cooking baskets 19 are preferably substantially rectangular in shape and are dimensioned to internally accommodate a given amount of pasta or similar foodstuff. Moreover, the cooking baskets 19 are adapted to be fitted in manually-removable manner into the upper mouth 3a of the cooking basin 3 so as to plunge all their contents into the water contained inside the cooking basin 3, The cooking baskets 19 are preferably provided with at least one manually-sizable handle allowing easy and safe manual handling of the cooking basket 19.

Preferably, the cooking basin 3 is dimensioned to accommodate, at the same time, a number (three in the example shown) of removable cooking baskets 19 arranged one adjacent the other, aligned along the centerline of the upper mouth 3a of the same cooking basin 3.

More in detail, the/each removable cooking basket 19 preferably has a water permeable, concave central section that forms the container for said given amount of pasta or other foodstuff and is dimensioned to deeply fit into the cooking basin 3, and a pair of projecting winglets/appendages that jut out in cantilever manner from opposite sides of the concave central section and are adapted to rest on opposite edges of the upper mouth 3a of cooking basin 3, while the concave central section remains suspended inside the cooking basin 3.

In the example shown, in particular, the concave central section of the/each removable cooking basket 19 is preferably substantially rectangular in shape and preferably has a rigid meshed structure. Preferably the width of the concave central section under approximates (i.e. is slightly lower than) the width of the cooking basin 3.

With reference to Figures 1 and 2, the pasta cooking appliance 1 additionally comprises: an electrically-operated blowing device 20 which is adapted to blow an air jet F towards the surface of the water contained in the cooking basin 3 so as to prevent the starch foam from covering the whole surface of the water; and an electronic control unit 21 which is adapted to switch on and off the blowing device 20. Preferably, the electronic control unit 21 is furthermore adapted to also directly control the heating device 4, or rather the heat-output of the heating device 4, together with or bypassing the control panel 5.

Accordingly, the electronic control unit 21 is advantageously connected to the control panel 5 to receive a signal indicative of the manually set heat-output value of the heating device 4.

More in detail the electronic control unit 21 is preferably configured to temporarily switch on the blowing device 20, and optionally to reduce the heat-output of the heating device 4, when it is detected that a boil-over phenomenon is taking place or is ready to take place in the cooking basin 3.

Preferably, the blowing device 20 is adapted to direct the air jet F in a substantially horizontal direction, which is substantially tangent to the upper mouth 3a of the cooking basin 3, so that the air jet F can flow substantially parallel to the free water surface when the basin 3 is filled with water. Moreover, the air jet F is preferably blown along a direction that substantially coincides with, or is parallel to, the centerline of the upper mouth 3a of the cooking basin 3, towards the rear wall of the cabinet 2.

Therefore, the air jet F flows nearly horizontally along the upper mouth 3a of the cooking basin 3, towards the rear wall of the cabinet 2, and grazes the surface of the water contained in the cooking basin 3, thus pushing the starch foam towards a wall of the cooking basin 3. The starch foam is also eliminated thanks to the hitting action of the air jet on the foaming bubbles, which makes them bursting.

Preferably, the air jet F has a flowrate greater than 50 m³/h (cubic meters per hour), for example equal to 70 m³/h.

The electronic control unit 21 is adapted to switch on and off the blowing device 20, and optionally to reduce the heat-output of the heating device 4, according to the signals arriving from one or more temperature sensors 22 capable of detecting the current temperature To of the water contained in the cooking basin 3, and/or according to the signals arriving from a presence sensor 23 capable of detecting when hot water flows along the overflow drain line 15, and/or according to a selected heat-output of the heating device 4.

In a first possible embodiment, the electronic control unit 21 is connected to sensor 22 to receive a signal indicative of the temperature T₀ of the water in the cooking basin and is configured to switch on the blowing device 20, and optionally to reduce the heat-output of the heating device 4, when the sensor 22 detects that the temperature T₀ of the water in the cooking basin is over a predetermined value. Preferably, this occurs when the temperature T₀ is over 90°C, more preferably when it is between 95°C and 99°C.

In a second possible embodiment, the electronic control unit 21 is connected to sensor 23 to receive a signal indicative of the presence of hot water in the overflow drain line 15 and is configured to switch on the blowing device 20, and optionally to reduce the heat-output of the heating device 4, when the sensor 23 detects that hot water is flowing along the overflow drain line 15.

In a third possible embodiment, the electronic control unit 21 is connected to sensor 22 to receive a signal indicative of the temperature T₀ of the water in the cooking basin and is configured to switch on the blowing device 20, and optionally to reduce the heat-output of the heating device 4, when the sensor 22 detects that the temperature T₀ of the water in the cooking basin is over a predetermined value and the heating device 4 is operating in a higher heat output range. Preferably, this occurs when the temperature T₀ is over 90°C, more preferably when it is between 95°C and 99°C, and when the heating device 4 is operating between 70% and 100% of its maximum heat output.

To summarize, the electronic control unit 21 is configured to detect when the pasta cooking appliance 1 is operating under boil-over conditions and to switch on the blowing device 20 when water boil-over conditions are detected. Boil-over conditions are detected when the control unit 21, based on the signal received from sensor 22, or sensor 23, or sensor 22 and control panel 5, determines that water boil-over is taking place in the cooking basin, or is expected to occur in a short time, such as in a few seconds, in the cooking basin. More in detail, in the three above embodiments, boil-over conditions are detected by the control unit 21 when the control unit 21 receives:
- in the first embodiment, a signal from sensor 22 corresponding to a temperature T₀ of the water in the cooking basin over a predetermined value;
- in the second embodiment, a signal from sensor 23 corresponding to the presence of hot water in the overflow drain line 15;
- in the third embodiment, a signal from sensor 22 corresponding to a temperature To of the water in the cooking basin over a predetermined value and a signal from the control panel 5 corresponding to a value of heat output of the heating device 4 within a predetermined heat output range.

In the example shown, in particular, the presence sensor 23 is preferably a temperature sensor, which is preferably physically coupled, more preferably attached directly, to the tubular member 16, and which is capable of measuring the current temperature T₁ of tubular member 16, or rather of a given limited portion of tubular member 16.

The boiling water of the cooking basin 3 that flows downwards into the tubular member 16, in fact, causes a sudden temperature increase of the tubular member 16 that can be used to determine when a boil over phenomenon is taking place in the cooking basin 3.

Alternatively, the presence sensor 23 could be a conductometric sensor, or a capacitive sensor, or an infrared sensor, or an inductive sensor.

With reference to Figures 1 and 2, the electrically-operated blowing device 20 preferably comprises:
- an electric blower 25, preferably a centrifugal blower, which is located inside the cabinet 2, preferably adjacent to the cooking basin 3;
- at least one air nozzle 26 which is placed on one side of the upper mouth 3a of cooking basin 3, preferably nearly coplanar to the upper mouth 3a of cooking basin 3, is connected to the delivery of the electric blower 25 so as to receive the airflow generated by the same blower, and is designed to project the nearly horizontal air jet F along the upper mouth 3a of the cooking basin 3 so that the same air jet F can graze the surface of the water contained in the cooking basin 3; and
- preferably, an air duct 27 connecting the blower 25 with the nozzle 26

In the example shown, in particular, the air nozzle 26 is preferably located behind the front wall of cabinet 2 so as to direct the air jet F towards the rear wall of cabinet 2, preferably in a direction nearly parallel to the centerline of the upper mouth 3a of cooking basin 3.

Preferably the/each air nozzle 26 if furthermore housed/accommodated inside the lateral recess 18 of the upper mouth 3a of cooking basin 3.

The air nozzle 26 is positioned slightly over the horizontal plane defined by the free surface of water when the basin 3 is filled with water, so that the air jet F can flow onto the free water surface substantially tangential to the same.

More in detail, the air nozzle 26 preferably consists of a nearly horizontally-extending, tubular member which preferably has a rectangular cross section, and is preferably placed on top of a chimney pot member defining the air duct 27, The chimney pot member 27 preferably rises upwards from the bottom of the lateral recess 18 of upper mouth 3a preferably nearly vertically, and is directly connected to the delivery of electric blower 25 beneath the bottom of the lateral recess 18. The airflow produced by the electric blower 25 therefore flows upwards within the chimney pot member 27 up to the air nozzle 26.

Preferably the top wall 26a (add the number in Figure 2) of the air nozzle 26 extends substantially horizontal and substantially coplanar with the perimetric rim of the upper mouth 3a of cooking basin 3, so as to form a resting surface for the cooking baskets 19.

With reference to Figure 2, the electrically-operated blowing device 20 preferably includes also an auxiliary drain tube 28 that branches off from the bottom of the chimney pot member 27. The auxiliary drain tube 28 preferably joins the connecting tube 17 of the overflow drain line 15, so as to be able to immediately drain, out of the chimney pot member 27 and straight to the waste-water drainage pipe (not shown), the water that may accidentally arrive into the chimney pot member 27 via the air nozzle 26.

Alternatively, the second end of drain tube 28 can be directly connectable to the external waste-water drainage pipe.

General operation of the pasta cooking appliance 1 differs from that of known professional pasta cooking appliances in that there is an air jet F that is selectively directed towards the surface of the water boiling in cooking basin 3.

The operating method of pasta cooking appliance 1 further differs from that of known professional pasta cooking appliances in that the electronic control unit 21 selectively switches on the blowing device 20 preferably for a given time interval, when it detects that the pasta cooking appliance 1 is in boil-over conditions or close to boil-over conditions.

In other words, the electronic control unit 21 switches on the blowing device 20 when a water boil-over phenomenon is taking place or is ready to take place, i.e. when conditions for boil-over are detected.

More in detail, the operating method of pasta cooking appliance 1 comprises the step of detecting when the same pasta cooking appliance 1 is in, or close to, boil-over conditions, and then the step of switching on the blowing device 20 preferably for a given time interval when such conditions are detected.

Preferably, the operating method of pasta cooking appliance 1 additionally comprises, after having detected that the pasta cooking appliance 1 is in or close to boil-over conditions, also the step of reducing the heat-output of the heating device 4, preferably for a given time interval and/or preferably almost contemporaneously to the switching on of the blowing device 20.

The step of reducing the heat-output of heating device 4 may consist in temporarily reducing the heat-output of the heating device 4 to a pre-set safety value preferably, though not necessary, equal to 50% of the maximum heat output of heating device 4, or in temporarily reducing the heat-output of heating device 4 by a pre-set amount preferably ranging between 10% and 50%.

In one possible operative method, assuming that the cooking basin 3 is full of water, that the kitchen staff has set the heating device 4 to the maximum heating power, and that the blowing device 20 is switched off, the electronic control unit 21 of pasta cooking appliance 1 preferably supervises/monitors the temperature T₁ of the tubular member 16 by means of sensor 23 and operates as follows.

When the temperature T₁ of the tubular member 16 has a sudden rise beyond a given higher threshold value preferably equal, for example, to 80°C, the electronic control unit 21 assumes that the water inside the cooking basin 3 is boiling over, i.e. it detects that pasta cooking appliance is operating in boiling over conditions.

When this occurs, i.e. when it is assumed that the water inside the cooking basin 3 is boiling over, the electronic control unit 21 immediately switches on the blowing device 20 to stop water from passing into the overflow drain line 15, and preferably also temporarily autonomously reduces the heat-output of the heating device 4 to a pre-set safety value preferably equal to 50% of the maximum heat output of heating device 4.

Preferably, the electronic control unit 21 furthermore keeps the blowing device 20 switched on for a given time interval preferably ranging between 10 seconds and 120 seconds, more preferably between 10 and 20 seconds, or alternatively until the temperature T₁ of tubular member 16 drops beneath a lower threshold value, for example equal to 65°C.

Preferably, the electronic control unit 21 furthermore keeps the heat-output of heating device 4 at the aforesaid safety value for a time interval preferably ranging between 10 seconds and 90 seconds, more preferably between 20 and 60 seconds, or alternatively until the temperature T₁ of tubular member 16 drops beneath a lower threshold value, for example equal to 65°C, and then returns its value to the one mutually set by the kitchen staff via the control panel 5.

The steps referred above are repeated each time the electronic control unit 21 detects that the water inside the cooking basin 3 is boiling over.

According to an alternative operative method, the electronic control unit 21 supervises/monitors the temperature T₀ of the water contained in the cooking basin 3 and switches on the blowing device 20 when both the following conditions are met: the temperature T₀ of the water contained in the cooking basin 3 is above a given threshold value preferably greater than 90°C, more preferably between 95°C and 99°C, for example equal to 97°C; and the heat-output of the heating device 4 is manually set via the control panel 5 to a given value within a predetermined range, preferably between 70% and 100% of the maximum heat output of the heating device 4.

In other words, the electronic control unit 21 switches on the blowing device 20 when the pasta cooking appliance 1 is operating under boil over conditions, i.e. under operative conditions where the water in the cooking basin 3 boils over or is expected to boil over in a short time, typically within a few seconds.

Preferably the electronic control unit 21 autonomously switches off the blowing device 20 at any time any one of the above two working conditions (T₀ above a predetermined threshold, heat-output in a predetermined range) is not met.

In another possible operative method, the electronic control unit 21 supervises/monitors the temperature T₀ of the water contained in the cooking basin 3 and switches on the blowing device 20 when the temperature T₀ of the water contained in the cooking basin 3 is above a given threshold value, preferably greater than to 90°C, more preferably between 95°C and 99°C, for example 97°C, independently from the heat-output value of the heating device 4.

The advantages connected to the presence of the blowing device 20 are the following.

As revealed by experimental tests, the air jet F produced by the blowing device 20 prevents the starch foam from covering the whole surface of the boiling water contained in cooking basin 3, thus minimizing the boil-over phenomenon.

Furthermore the selective blowing of air towards the surface of the water contained in cooking basin 3, preferably combined with the temporarily reduction of the heat output of heating device 4, allows to minimize the waste of hot water during operation of the pasta cooking appliance 1, thus significantly shortening the recovery time after a boil-over phenomenon and at same time highly increasing the energy efficiency of pasta cooking appliance 1 vis-à-vis the pasta cooking appliances currently on the market.

Clearly, changes and variations may be made to the pasta cooking appliance 1 and to its operating method without, however, departing from the scope of the present invention.

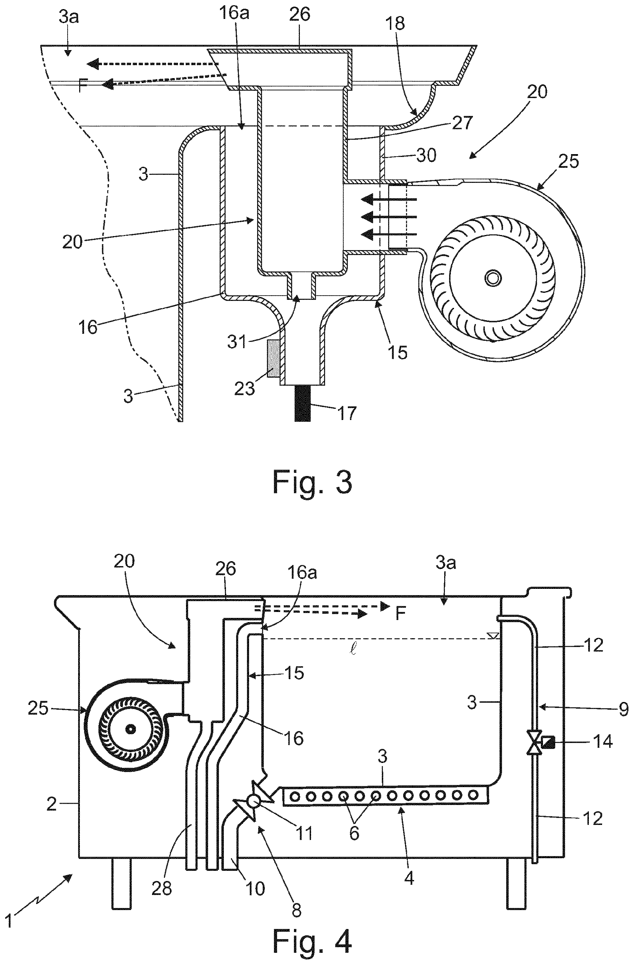

For example, with reference to Figure 3, the descending tubular member 16 of overflow drain line 15 may have a funnel-shaped upper segment 30 which forms/ delimits the upper mouth 16a of the same tubular member 16. The chimney pot member 27 that supports the air nozzle 26, in turn, is preferably located in the middle of the funnel-shaped upper segment 30 spaced from the lateral wall of tubular member 16, so as to protrude upwards from the upper mouth 16a.

Preferably, in this embodiment, the bottom wall of the chimney pot member 27 is provided with a drain opening 31 that puts the inside of the chimney pot member 27 in direct communication with the funnel-shaped upper segment 30 of tubular member 16, so as to allow the water that may accidentally arrive into the chimney pot member 27 to flow out of the chimney pot member 27 and directly drop into the tubular member 16.

Lastly, with reference to Figure 4, according to an alternative embodiment, the upper mouth 3a of cooking basin 3 preferably lacks the lateral recess 18 and both the air nozzle 26 and the upper mouth 16a of the descending tubular member 16 of overflow drain line 15 are arranged on a side wall of the cooking basin 3, immediately beneath the upper mouth 3a of cooking basin 3.

Preferably the air nozzle 26 and the upper mouth 16a of tubular member 16 are furthermore vertically staggered one above the other.

## Claims

1. Pasta cooking appliance (1) comprising: a self-supporting cabinet (2); an open-top cooking basin (3) recessed on the top of the cabinet (2) and dimensioned to contain several liters of water; and a heating device (4) adapted to heat up the water contained in the cooking basin (3) so as to bring the same water to boil;
wherein the pasta cooking appliance (1) additionally comprises:
an overflow drain line (15) which is designed to drain out of the cooking basin (3) the water exceeding a given maximum level (1) inside the cooking basin (3); and wherein the pasta cooking appliance (1) additionally comprises: an electrically-operated blowing device (20) adapted to blow an air jet (F) towards the surface of the water contained in the cooking basin (3); and an electronic control unit (21) adapted to switch on and off the blowing device (20), wherein the electronic control unit (21) is configured to detect when the pasta cooking appliance (1) is operating in water boil-over conditions and to switch on the blowing device (20) when said boil-over conditions are detected.

2. Pasta cooking appliance according to Claim 1, wherein the electronic control unit (21) is connected to at least one sensor (22; 23) and is configured to detect that the water in the cooking basin (3) is in boil-over conditions or close to boil-over conditions based on the signal received from the at least one sensor and to switch on the blowing device (20) when said boil-over conditions are detected.

3. Pasta cooking appliance according to claim 2, wherein said at least one sensor comprises a water presence sensor (23) capable of detecting the presence of water in the overflow drain line (15).

4. Pasta cooking appliance according to claim 2, wherein said at least one sensor comprises at least one temperature sensor (22) capable of detecting the temperature (T₀) of the water contained in the cooking basin (3).

5. Pasta cooking appliance according to claim 2, wherein said electronic control unit (21) is configured to detect said boil-over conditions based also on a further signal indicative of a heat output of the heating device (4).

6. Pasta cooking appliance according to any of the preceding claims, wherein the blowing device (20) is adapted to direct the air jet (F) substantially along a horizontal direction.

7. Pasta cooking appliance according to any of the preceding claims, wherein the blowing device (20) is adapted to direct the air jet (F) substantially tangent to an upper mouth (3a) of the cooking basin (3), so that the air jet (F) is allowed to graze the surface of the water contained in the cooking basin (3).

8. Pasta cooking appliance according to claim 6, wherein the electrically-operated blowing device (20) comprises an electric blower (25) and at least one air nozzle (26) which is placed on one side of the upper mouth (3a) of the cooking basin (3), is connected to the electric blower (25) so as to receive the airflow generated by the same blower (25), and is designed to eject an air jet (f) along the upper mouth (3a) of the cooking basin (3).

9. Pasta cooking appliance according to claim 7, wherein the upper mouth (3a) of the cooking basin (3) has a lateral recess (18) and the at least one air nozzle (26) is housed into said lateral recess (18).

10. Pasta cooking appliance according to any one of the preceding claims, wherein the electronic control unit (21) is adapted to directly control the heating device (4).

11. Pasta cooking appliance according to any one of the preceding claims, wherein it additionally comprises one or more discrete cooking baskets (19) each of which is dimensioned to internally accommodate a given amount of pasta or similar foodstuff, and is adapted to be fitted in manually-removable manner onto the cooking basin (3) so as to plunge all its contents into the water contained inside the cooking basin (3).

12. Operating method of a pasta cooking appliance comprising an open-top cooking basin dimensioned to contain several liters of water; the method comprising the steps of:
- heating-up the water contained in the cooking basin so as to bring it to boil;
- draining out of the cooking basin the water exceeding a given maximum level inside the cooking basin;
- detecting when the water in the cooking basin is in boil-over conditions or close to boil-over conditions; and
- blowing an air jet towards the surface of the water contained in the cooking basin when it is detected that the water in the cooking basin is in boil-over conditions or close to boil-over conditions.

13. Operating method according to Claim 12, further comprising reducing the heat-output of the heating device (4) when it is detected that the water in the cooking basin is in boil-over conditions or close to boil-over conditions.

## Patentansprüche

1. Pastakochgerät (1), umfassend: ein selbsttragendes Gehäuse (2); ein oben offenes Kochbecken (3), das in die Oberseite des Gehäuses (2) eingelassen und so dimensioniert ist, dass es mehrere Liter Wasser aufnehmen kann; und eine Heizvorrichtung (4), die so angepasst ist, das im Kochbecken (3) enthaltene Wasser zu erhitzen, um es zum Kochen zu bringen;
wobei das Pastakochgerät (1) zusätzlich umfasst:
eine Überlaufabflussleitung (15), die so angepasst ist, dass sie das Wasser, das einen vorgegebenen Höchststand (1) im Inneren des Kochbeckens (3) überschreitet, aus dem Kochbecken (3) ableitet; und wobei das Pastakochgerät (1) zusätzlich umfasst: eine elektrisch betriebene Gebläsevorrichtung (20), die so angepasst ist, dass sie einen Luftstrahl (F) auf die Oberfläche des in dem Kochbecken (3) enthaltenen Wassers bläst; und eine elektronische Steuereinheit (21), die so angepasst ist, dass sie die Gebläsevorrichtung (20) ein- und ausschaltet, wobei die elektronische Steuereinheit (21) so konfiguriert ist, dass sie erfasst, wenn das Pastakochgerät (1) überkocht, und dass sie die Gebläsevorrichtung (20) einschaltet, wenn das Überkochen erfasst wird.

2. Pastakochgerät nach Anspruch 1, wobei die elektronische Steuereinheit (21) mit mindestens einem Sensor (22; 23) verbunden und so konfiguriert ist, dass sie auf der Grundlage des von dem mindestens einen Sensor empfangenen Signals erfasst, dass das Wasser in dem Kochbecken (3) überkocht oder kurz vor dem Überkochen steht, und dass sie die Gebläsevorrichtung (20) einschaltet, wenn das Überkochen erfasst wird.

3. Pastakochgerät nach Anspruch 2, wobei der mindestens eine Sensor einen Wasseranwesenheitssensor (23) umfasst, der in der Lage ist, die Anwesenheit von Wasser in der Überlaufabflussleitung (15) zu erfassen.

4. Pastakochgerät nach Anspruch 2, wobei der mindestens eine Sensor mindestens einen Temperatursensor (22) umfasst, der in der Lage ist, die Temperatur (T₀) des im Kochbecken (3) enthaltenen Wassers zu erfassen.

5. Pastakochgerät nach Anspruch 2, wobei die elektronische Steuereinheit (21) so konfiguriert ist, dass sie das Überkochen auch auf der Grundlage eines weiteren Signals erfasst, das eine Wärmeabgabe der Heizvorrichtung (4) anzeigt.

6. Pastakochgerät nach einem der vorhergehenden Ansprüche, wobei die Gebläsevorrichtung (20) dazu angepasst ist, den Luftstrahl (F) im Wesentlichen entlang einer horizontalen Richtung zu richten.

7. Pastakochgerät nach einem der vorhergehenden Ansprüche, wobei die Gebläsevorrichtung (20) angepasst ist, den Luftstrahl (F) im Wesentlichen tangential zu einer oberen Öffnung (3a) des Kochbeckens (3) zu richten, so dass der Luftstrahl (F) die Oberfläche des im Kochbecken (3) enthaltenen Wassers streifen kann.

8. Pastakochgerät nach Anspruch 6, wobei die elektrisch betriebene Gebläsevorrichtung (20) ein elektrisches Gebläse (25) und mindestens eine Luftdüse (26) umfasst, die auf einer Seite der oberen Öffnung (3a) des Kochbeckens (3) angeordnet ist, mit dem elektrischen Gebläse (25) verbunden ist, um den von demselben Gebläse (25) erzeugten Luftstrom zu empfangen, und dazu angepasst ist, einen Luftstrahl (f) entlang der oberen Öffnung (3a) des Kochbeckens (3) auszustoßen.

9. Pastakochgerät nach Anspruch 7, wobei die obere Öffnung (3a) des Kochbeckens (3) eine seitliche Aussparung (18) aufweist und die mindestens eine Luftdüse (26) in dieser seitlichen Aussparung (18) untergebracht ist.

10. Pastakochgerät nach einem der vorhergehenden Ansprüche, wobei die elektronische Steuereinheit (21) zur direkten Steuerung der Heizvorrichtung (4) angepasst ist.

11. Pastakochgerät nach einem der vorhergehenden Ansprüche, **dadurch gekennzeichnet, dass** es zusätzlich einen oder mehrere einzelne Kochkörbe (19) umfasst, von denen jeder so dimensioniert ist, dass er im Inneren eine bestimmte Menge an Nudeln oder ähnlichen Lebensmitteln aufnehmen kann, und so angepasst ist, dass er in manuell abnehmbarer Weise auf das Kochbecken (3) aufgesetzt werden kann, um seinen gesamten Inhalt in das im Inneren des Kochbeckens (3) enthaltene Wasser zu tauchen.

12. Betriebsverfahren eines Pastakochgeräts, das ein nach oben offenes Kochbecken umfasst, das so dimensioniert ist, dass es mehrere Liter Wasser enthält; das Verfahren die folgenden Schritte umfassend:
- Erhitzen des Wassers im Kochbecken, um es zum Kochen zu bringen;
- Ablassen des Wassers aus dem Kochbecken, das einen bestimmten Höchststand im Kochbecken überschreitet;
- Erkennen, wenn das Wasser im Kochbecken überkocht oder fast überkocht; und
- Blasen eines Luftstrahls auf die Oberfläche des im Kochbecken enthaltenen Wassers, wenn erfasst wird, dass das Wasser im Kochbecken überkocht oder kurz davor steht.

13. Betriebsverfahren nach Anspruch 12, ferner umfassend das Reduzieren der Wärmeabgabe der Heizvorrichtung (4), wenn erfasst wird, dass das Wasser im Kochbecken überkocht oder kurz davor steht, zu überkochen.

## Revendications

1. Appareil de cuisson de pâtes (1) comprenant : une armoire autoportante (2) ; une cuve de cuisson ouverte (3) encastrée au sommet de l'armoire (2) et dimensionnée pour contenir plusieurs litres d'eau ; et un dispositif de chauffage (4) adapté pour chauffer l'eau contenue dans la cuve de cuisson (3) de manière à porter à ébullition la même eau ;
dans lequel l'appareil de cuisson de pâtes (1) comprend en outre :
une conduite d'évacuation de trop-plein (15) qui est destinée à évacuer hors de la cuve de cuisson (3) l'eau dépassant un niveau maximum donné (1) à l'intérieur de la cuve de cuisson (3) ; et dans lequel l'appareil de cuisson de pâtes (I) comprend en outre : un dispositif de soufflage (20) actionné électriquement adapté pour souffler un jet d'air (F) vers la surface de l'eau contenue dans le bac de cuisson (3) ; et une unité de commande électronique (21) adaptée pour allumer et éteindre le dispositif de soufflage (20), dans lequel l'unité de commande électronique (21) est configurée pour détecter lorsque l'appareil de cuisson de pâtes (1) fonctionne dans des conditions de débordement de l'eau et pour commuter sur le dispositif de soufflage (20) lorsque lesdites conditions de débordement sont détectées.

2. Appareil de cuisson de pâtes selon la revendication 1, dans lequel l'unité de commande électronique (21) est reliée à au moins un capteur (22 ; 23) et est configurée pour détecter que l'eau dans la cuve de cuisson (3) est en conditions de débordement ou proches des conditions de débordement sur la base du signal reçu du au moins un capteur et d'allumer le dispositif de soufflage (20) lorsque lesdites conditions de débordement sont détectées.

3. Appareil de cuisson de pâtes selon la revendication 2, dans lequel ledit au moins un capteur comprend un capteur de présence d'eau (23) apte à détecter la présence d'eau dans la conduite d'évacuation de trop-plein (15).

4. Appareil de cuisson de pâtes selon la revendication 2, dans lequel ledit au moins un capteur comprend au moins un capteur de température (22) apte à détecter la température (T₀) de l'eau contenue dans la cuve de cuisson (3).

5. Appareil de cuisson de pâtes selon la revendication 2, dans lequel ladite unité de commande électronique (21) est configurée pour détecter lesdites conditions de débordement sur la base également d'un autre signal indicatif d'une puissance calorifique du dispositif de chauffage (4).

6. Appareil de cuisson de pâtes selon une quelconque des revendications précédentes, dans lequel le dispositif de soufflage (20) est adapté pour diriger le jet d'air (F) sensiblement le long d'une direction horizontale.

7. Appareil de cuisson de pâtes selon une quelconque des revendications précédentes, dans lequel le dispositif de soufflage (20) est adapté pour diriger le jet d'air (F) de manière sensiblement tangente à une embouchure supérieure (3a) de la cuve de cuisson (3), de sorte que le jet d'air (F) soit autorisé à effleurer la surface de l'eau contenue dans la cuve de cuisson (3).

8. Appareil de cuisson de pâtes selon la revendication 6, dans lequel le dispositif de soufflage à commande électrique (20) comprend une soufflante électrique (25) et au moins une buse d'air (26) qui est placée d'un côté de l'embouchure supérieure (3a) de la cuve de cuisson (3), est raccordée au ventilateur électrique (25) de manière à recevoir le flux d'air généré par ce même ventilateur (25), et est destinée à éjecter un jet d'air (f) le long de l'embouchure supérieure (3a) de la cuve de cuisson (3).

9. Appareil de cuisson de pâtes selon la revendication 7, dans lequel l'embouchure supérieure (3a) de la cuve de cuisson (3) présente un évidement latéral (18) et la au moins une buse d'air (26) est renfermée dans ledit évidement latéral (18).

10. Appareil de cuisson de pâtes selon une quelconque des revendications précédentes, dans lequel l'unité de commande électronique (21) est adaptée pour commander directement le dispositif de chauffage (4).

11. Appareil de cuisson de pâtes selon une quelconque des revendications précédentes, **caractérisé en ce qu'**il comprend en outre un ou plusieurs paniers de cuisson discrets (19) dont chacun est dimensionné pour renfermer intérieurement une quantité donnée de pâtes ou de produits alimentaires similaires, et est adapté pour être monté de manière amovible manuellement sur la cuve de cuisson (3) de manière à plonger tout son contenu dans l'eau contenue à l'intérieur de la cuve de cuisson (3).

12. Mode de fonctionnement d'un appareil de cuisson de pâtes comprenant une cuve de cuisson ouverte au sommet dimensionnée pour contenir plusieurs litres d'eau ; le procédé comprenant les étapes de :
- chauffage de l'eau contenue dans la cuve de cuisson pour la porter à ébullition ;
- évacuation hors de la cuve de cuisson de l'eau dépassant un niveau maximum donné à l'intérieur de la cuve de cuisson ;
- détection quand l'eau dans la cuve de cuisson est en ébullition ou proche des conditions de débordement ; et
- soufflage d'un jet d'air vers la surface de l'eau contenue dans la cuve de cuisson lorsqu'il est détecté que l'eau dans la cuve de cuisson est en état de débordement ou proche des conditions de débordement.

13. Procédé de fonctionnement selon la revendication 12, comprenant en outre la réduction de la puissance calorifique du dispositif de chauffage (4) lorsqu'il est détecté que l'eau dans le bassin de cuisson est en condition de débordement ou proche de conditions de débordement.
